# EUROPEAN PATENT APPLICATION

(11) **EP 3 267 154 A1**
(43) Date of publication of application: **10.01.2018**
(21) Application number: 17178683.3
(22) Date of filing: 29.06.2017
(51) Int. Cl.: G01C 21/32, G01C 21/14, G01C 21/20

(54) **INFORMATION PROCESSING METHOD, INFORMATION PROCESSING DEVICE, AND INFORMATION PROCESSING PROGRAM**

(30) Priority: 05.07.2016 JP 2016133561
(71) Applicant: Fujitsu Limited, Kawasaki-shi, Kanagawa 211-8588 (JP)
(72) Inventor: Shigezumi, Junichi, Kanagawa, 211-8588 (JP); Asai, Tatsuya, Kanagawa, 211-8588 (JP); Morikawa, Hiroaki, Kanagawa, 211-8588 (JP); Inakoshi, Hiroya, Kanagawa, 211-8588 (JP)
(74) Representative: Hoffmann Eitle

(57) **Abstract**

An information processing method executed by a processor (11) included in an information processing device (1), the information processing method includes identifying a plurality of observation points (B, C, D, E, F, G, H, I, J, K, L) near a line segment (51) whose end points (A, M) are a starting point and a terminal point between which a locus (51) is interpolated; extracting an observation point (C.K) from the plurality of identified observation points based on a distance from a given point (57, 58) on the line segment; and interpolating the locus (51, 511, 512) by using the extracted observation point (C, K).

## Description

### FIELD

The embodiments discussed herein are related to an information processing method, an information processing device, and an information processing program.

### BACKGROUND

In recent years, an information processing device has become capable of acquiring a large amount of location information of a movable object by receiving global navigation satellite system (GNSS) data from an artificial satellite. Furthermore, utilization of the acquired location information is being promoted in navigation services, Web-diary services of the action history, traffic analysis for urban transportation planning or the like, for example.

When an information processing device acquires location information from a movable object, it takes a commensurate cost to communicate with an artificial satellite and acquire GNSS data and thus there is a limit to the frequency of the acquisition of the location information. For this reason, in the related art, it is difficult to correctly grasp the locus of the movement of the movable object. In utilization of acquired location information, it is preferable that the location information may be interpolated according to the degree of the acquisition interval of data. Therefore, in recent years, a program has been developed that interpolates the locus of one movable object by acquiring pieces of location information of plural movable objects and associating the acquired pieces of location information with each other.
For example, a program described in Japanese Laid-open Patent Publication No. 2015-170030 interpolates a locus along the proper path along which one movable object is expected to have moved by identifying pieces of location information of the loci of other movable objects that exist near the locus of the one movable object and linking the locus of the one movable object and the identified pieces of location information.

### SUMMARY

### [TECHNICAL PROBLEM]

However, with the above-described technique, there is a problem that a locus is often interpolated along a longer path than the proper path due to identification of excess location information. In view of the above, it is preferable that a locus may be interpolated along the proper path.

In view of the foregoing, it is an object of the disclosure is to provide an information processing method, an information processing device, and an information processing program that are capable of interpolating a lotus along the proper path.

### [SOLUTION TO PROBLEM]

According to an aspect of the embodiments, an information processing method executed by a processor included in an information processing device, the information processing method includes identifying a plurality of observation points near a line segment whose end points are a starting point and a terminal point between which a locus is interpolated; extracting an observation point from the plurality of identified observation points based on a distance from a given point on the line segment; and interpolating the locus by using the extracted observation point.

### [ADVANTAGEOUS EFFECTS OF INVENTION]

In an aspect, it is possible to interpolate a lotus along the proper path.

### BRIEF DESCRIPTION OF DRAWINGS

FIG. 1 is a block diagram illustrating a hardware group of an information processing device;
FIG. 2 is an explanatory diagram illustrating one example of a record layout of a location information database (DB);
FIG. 3 is an explanatory diagram illustrating one example of a record layout of a locus DB;
FIG. 4 is an explanatory diagram illustrating one example of a record layout of an observation point DB;
FIG. 5 is an explanatory diagram illustrating one example of a record layout of a line segment DB;
FIG. 6 is an explanatory diagram illustrating one example of a record layout of an interpolation DB;
FIG. 7 is an explanatory diagram for explaining loci and observation points displayed on a display unit;
FIG. 8 is an explanatory diagram for explaining pieces of location information in a circle having a locus as a diameter;
FIG. 9 is an explanatory diagram for explaining a locus interpolated by an observation point K;
FIG. 10 is an explanatory diagram for explaining pieces of location information in a circle having a line segment as a diameter;
FIG. 11 is an explanatory diagram for explaining a locus interpolated by an observation point C;
FIG. 12 is an explanatory diagram for explaining a locus in a case in which it is determined that a line segment is not stored in a before-processing line segment column of a line segment DB;
FIG. 13 is a flowchart illustrating a processing procedure of an information processing system in an embodiment 1;
FIG. 14 is a flowchart illustrating a processing procedure of an information processing system in the embodiment 1;
FIG. 15 is an explanatory diagram for explaining an overlapping range in which circles centered at two end points of a locus overlap;
FIG. 16 is a flowchart illustrating an information processing system according to an embodiment 2;
FIG. 17 is a block diagram illustrating a hardware group of an information processing device;
FIG. 18 is an explanatory diagram illustrating one example of a record layout of a distance DB;
FIG. 19 is a flowchart illustrating an information processing system according to an embodiment 3;
FIG. 20 is an explanatory diagram illustrating one example of a record layout of a line segment DB in an embodiment 4;
FIG. 21 is an explanatory diagram for explaining loci and observation points displayed on a display unit in the embodiment 4;
FIG. 22 is an explanatory diagram for explaining pieces of location information after a locus is interpolated by an observation point K;
FIG. 23 is an explanatory diagram for explaining pieces of location information after a locus is interpolated by an observation point K;
FIG. 24 is a flowchart illustrating an information processing system according to the embodiment 4;
FIG. 25 is a flowchart illustrating an information processing system according to the embodiment 4;
FIG. 26 is a block diagram illustrating a hardware group of an information processing device; and
FIG. 27 is a functional block diagram of an information processing device.

### DESCRIPTION OF EMBODIMENTS

### [Embodiment 1]

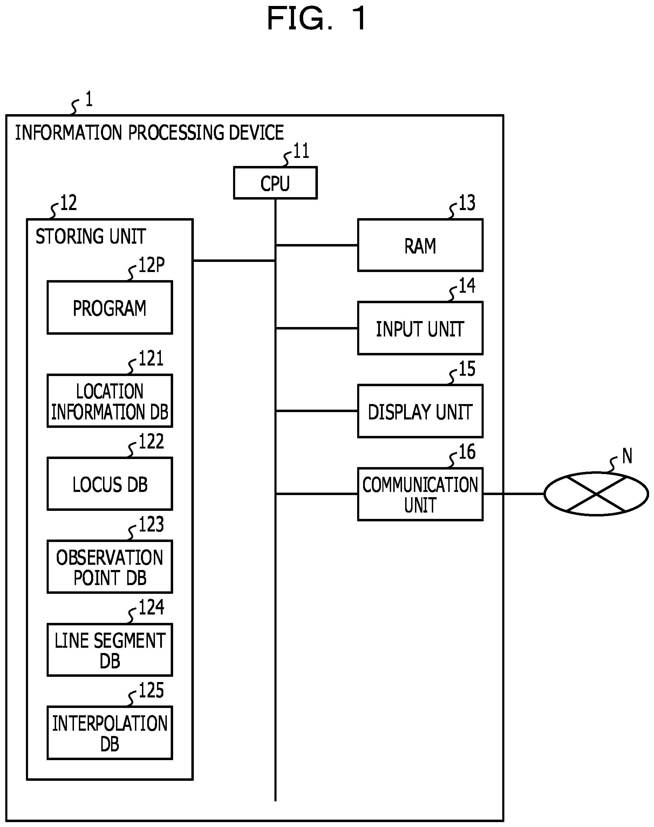

The present embodiment will be described below with reference to the drawings. FIG. 1 is a block diagram illustrating a hardware group of an information processing device. An information processing device 1 illustrated in FIG. 1 includes a central processing unit (CPU) 11, a storing unit 12, a random access memory (RAM) 13, an input unit 14, a display unit 15, and a communication unit 16.

The CPU 11 is coupled to the respective units of the hardware through a bus. The CPU 11 includes one or plural CPUs, a multi-core CPU or the like, for example. The CPU 11 controls the respective units of the hardware in accordance with a program 12P stored in the storing unit 12.

The storing unit 12 is a hard disk, a high-capacity memory or the like, for example. In the storing unit 12, various pieces of data used when the CPU 11 executes processing, a location information DB 121, a locus DB 122, an observation point DB 123, a line segment DB 124, an interpolation DB 125, and the program 12P are stored.

The RAM 13 is a static random access memory (SRAM), a dynamic random access memory (DRAM), a flash memory or the like, for example. The RAM 13 also functions as a storing unit and temporarily stores various pieces of data generated in execution of various kinds of programs by the CPU 11.

The input unit 14 is an input device such as a mouse or a keyboard. The input unit 14 transmits accepted operation information to the CPU 11. The display unit 15 displays image data transmitted from the CPU 11. The display unit 15 is a liquid crystal screen, for example. The communication unit 16 is a wireless local area network (LAN) card, a communication module for a mobile phone or the like, for example. The communication unit 16 receives various kinds of information such as location information through a communication network N. The location information is the X-coordinate and the Y-coordinate in a Cartesian coordinate system, the latitude and the longitude in a geographic coordinate system or the like, for example. The location information may include additional information added to the location information, such as a clock time.

The CPU 11 acquires location information from a different server (not illustrated) that stores location information obtained by carrying out observation at a given interval regarding plural movable objects through the communication unit 16. In the present embodiment, description will be made about a form in which location information is acquired through the different server as the method for acquiring the location information. However, the method is not limited thereto as long as the location information may be acquired. For example, the CPU 11 may acquire location information transmitted by an artificial satellite of a GNSS through the communication unit 16, information on access points of a wireless LAN, location information figured out from a camera image, location information of mobile phone base stations or the like at a given interval regarding plural movable objects. Alternatively, the CPU 11 may acquire location information stored in the storing unit 12 in advance.

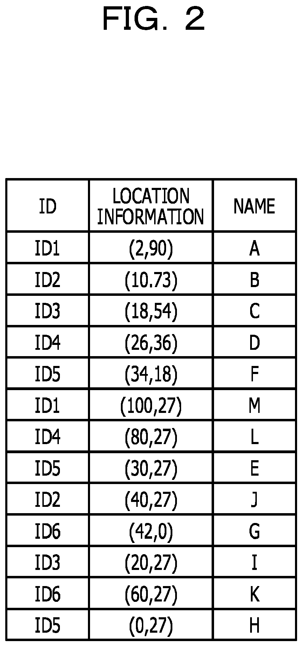

FIG. 2 is an explanatory diagram illustrating one example of a record layout of a location information DB. The location information DB illustrated by reference to FIG. 2 may be the location information DB 121 depicted in FIG. 1. The location information DB 121 is a database that stores location information. The location information DB 121 includes an identification (ID) column, a location information column, a name column and so forth. In the ID column, IDs for identifying movable objects are stored. The movable object is a car, a pedestrian or the like, for example. Plural movable objects exist and are associated with the IDs for identifying the respective movable objects. In the location information column, pieces of location information of observation points at which the movable objects corresponding to the IDs have been observed are stored. In the location information column, (2, 90) is stored, for example. (2, 90) indicates that the X-coordinate is 2 and the Y-coordinate is 90. In the name column, names for identifying the pieces of location information of the observation points are stored. The CPU 11 acquires pieces of location information with IDs from the communication unit 16. The CPU 11 stores the acquired IDs and pieces of location information in the location information DB 121.

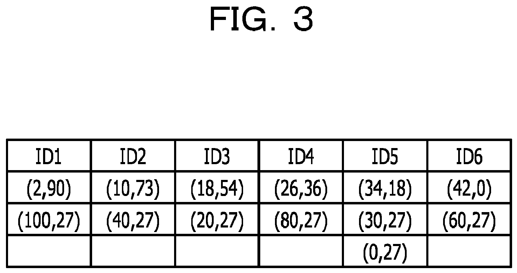

FIG. 3 is an explanatory diagram illustrating one example of a record layout of a locus DB. The locus DB illustrated by reference to FIG. 3 may be the locus DB 122 depicted in FIG. 1. The locus DB 122 is a database in which pieces of location information of the loci (hereinafter, represented as line segment to be described later depending on the case) of movement of movable objects are stored. The locus DB 122 includes ID 1 column, ID 2 column, ID 3 column ··· and so forth. In the ID 1 column, ID 2 column, ID 3 column ···, pieces of location information associated with the respective IDs are stored. For example, (2, 90), (100, 27) and so forth are stored in the ID 1 column. For example, pieces of location information of a locus indicating that the movable object of ID 1 has moved from a starting point (2, 90) to a terminal point (100, 27) are stored in the ID 1 column. The CPU 11 refers to the location information DB 121 and stores pieces of location information corresponding to the ID in each ID column.

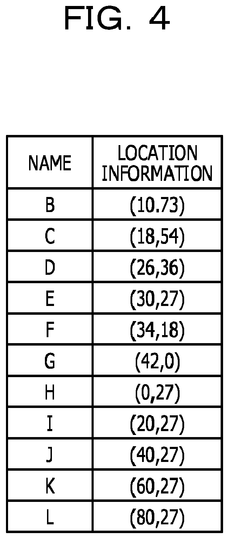

FIG. 4 is an explanatory diagram illustrating one example of a record layout of an observation point DB. The observation point DB illustrated by reference to FIG. 4 may be the observation point DB 123 depicted in FIG. 1. The observation point DB 123 is a database that stores pieces of location information of observation points. The observation point DB 123 includes a name column, a location information column and so forth. In the name column, names for identifying pieces of location information of observation points are stored. In the location information column, pieces of location information of observation points are stored. The storing method of the observation point DB 123 will be described later.

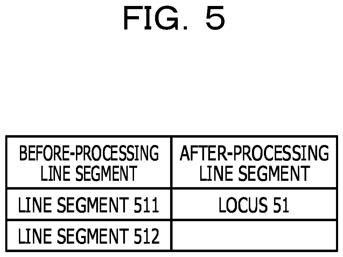

FIG. 5 is an explanatory diagram illustrating one example of a record layout of a line segment DB. The line segment DB illustrated by reference to FIG. 5 may be the line segment DB 124 depicted in FIG. 1. The line segment DB 124 is a database that stores line segments whose end points are a starting point and a terminal point between which a locus is interpolated. Hereinafter, the locus will be represented as the line segment depending on the case. The line segment DB 124 includes a before-processing line segment column, an after-processing line segment column and so forth. In the before-processing line segment column, line segments before execution of interpolation processing of interpolating a locus are stored. In the after-processing line segment column, line segments after execution of the interpolation processing are stored. The storing method of the line segment DB 124 will be described later.

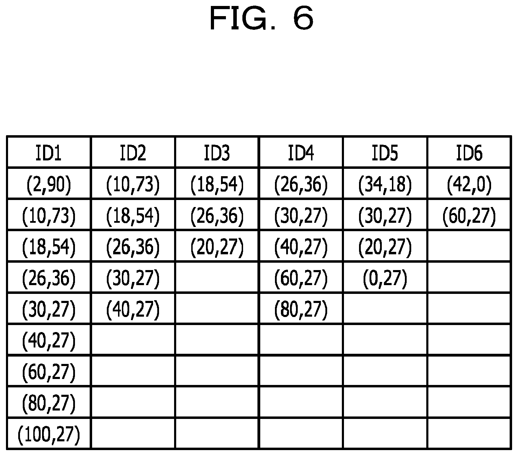

FIG. 6 is an explanatory diagram illustrating one example of a record layout of an interpolation DB. The interpolation DB illustrated by reference to FIG. 6 may be the interpolation DB 125 depicted in FIG. 1. The interpolation DB 125 is a database that stores interpolated loci. The interpolation DB 125 includes ID 1 column, ID 2 column, ID 3 column ··· and so forth. In the ID 1 column, ID 2 column, ID 3 column ···, pieces of location information associated with the respective IDs are stored. For example, the CPU 11 stores pieces of location information of interpolated loci in the interpolation DB 125 on each ID basis. The storing method of the interpolation DB 125 will be described later.

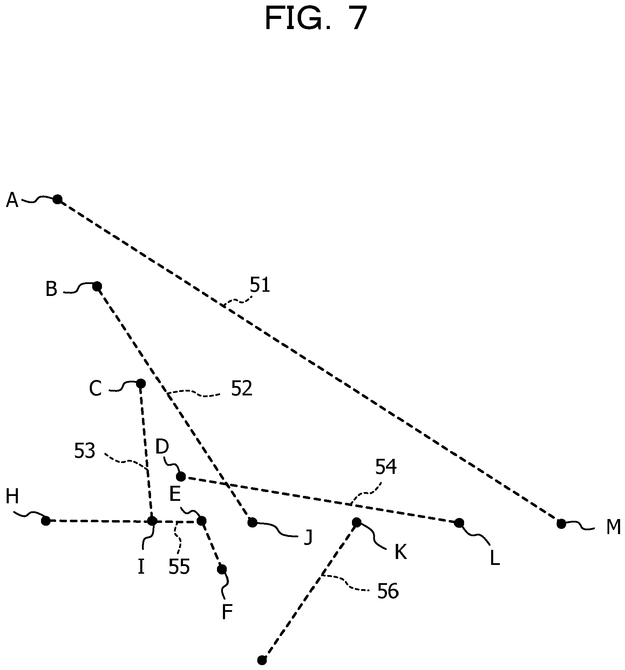

Details of an information processing system will be described below. FIG. 7 is an explanatory diagram for explaining loci and observation points displayed on a display unit. The display unit illustrated by reference to FIG. 7 may be the display unit 15 depicted in FIG. 1. The CPU 11 displays, on the display unit 15, a locus 51 that couples an observation point A and an observation point M, a locus 52 that couples an observation point B and an observation point J, and a locus 53 that couples an observation point C and an observation point I. Moreover, the CPU 11 displays, on the display unit 15, a locus 54 that couples an observation point D and an observation point L, a locus 55 that couples an observation point H, an observation point E, and an observation point F, and a locus 56 that couples an observation point K and an observation point G. The loci 51 to 56 correspond to the loci of the movable objects of IDs 1 to 6.

The CPU 11 refers to the locus DB 122 and determines whether or not pieces of location information are stored in the locus DB 122. Because pieces of location information are stored in the locus DB 122, the CPU 11 extracts location information (2, 90) corresponding to the observation point A and location information (100, 27) corresponding to the observation point M from the ID 1 column of the locus DB 122.

The CPU 11 stores the locus 51 in the before-processing line segment column of the line segment DB 124. The CPU 11 extracts pieces of location information of the observation points A and M of the locus 51 from the before-processing line segment column of the line segment DB 124. The CPU 11 deletes the locus 51 from the before-processing line segment column of the line segment DB 124 and stores the locus 51 in the after-processing line segment column of the line segment DB 124, and executes interpolation processing for the locus 51.

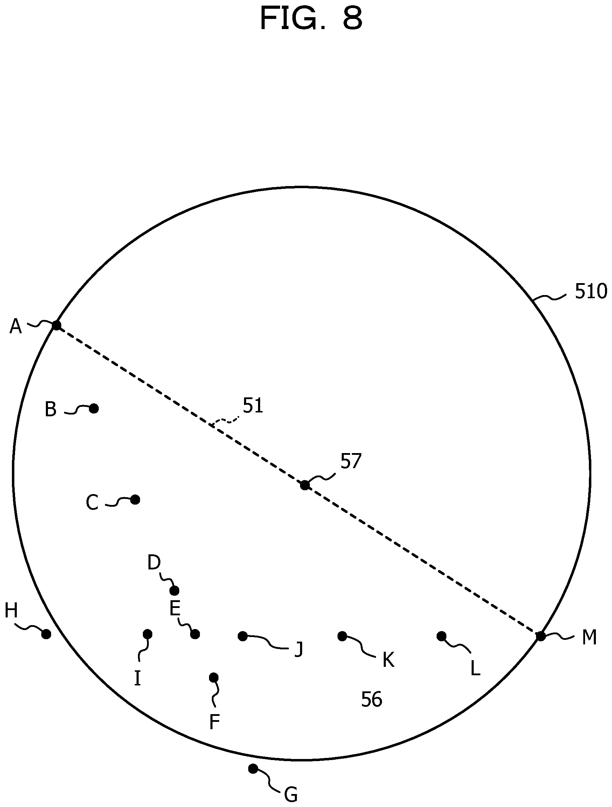

FIG. 8 is an explanatory diagram for explaining pieces of location information in a circle 510 having the locus 51 as the diameter. As illustrated in FIG. 8, the circle 510 is a circle that has the locus 51 as the diameter and has a midpoint 57 of the locus 51 as the center. The CPU 11 identifies pieces of location information of observation points B, C, D, E, F, I, J, K, and L that exist in the circle 510 having the extracted locus 51 as the diameter from the location information DB 121. The CPU 11 stores the pieces of location information corresponding to the observation points B, C, D, E, F, I, J, K, and L in the observation point DB 123.

The CPU 11 determines whether or not the location information of an observation point is stored in the observation point DB 123. Because the pieces of location information corresponding to the observation points B, C, D, E, F, I, J, K, and L are stored in the observation point DB 123, the CPU 11 determines that the location information of an observation point is stored in the observation point DB 123. The CPU 11 extracts the location information of the observation point whose distance from the midpoint 57 of the locus 51 is shortest from the observation point DB 123. Because the observation point whose distance from the midpoint 57 is shortest is the observation point K, the CPU 11 extracts the location information of the observation point K from the observation point DB 123.

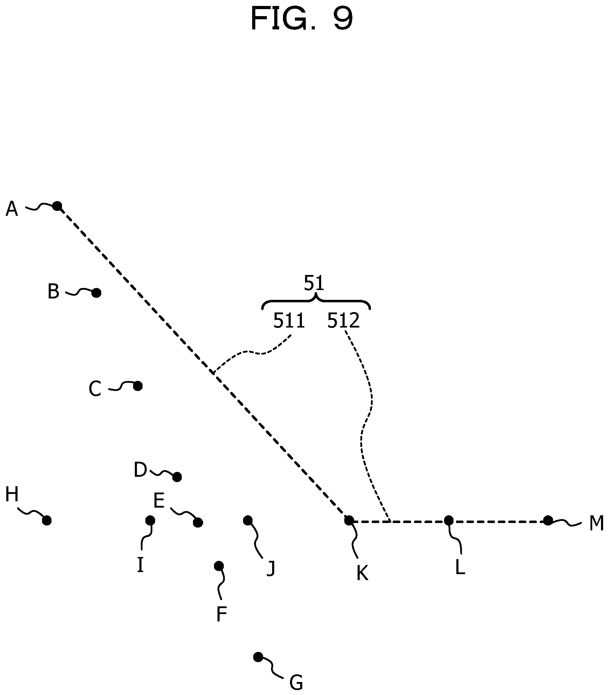

FIG. 9 is an explanatory diagram for explaining the locus 51 interpolated by the observation point K. As illustrated in FIG. 9, the locus 51 includes a line segment 511 that couples the observation point A and the observation point K and a line segment 512 that couples the observation point K and the observation point M.

The CPU 11 generates the line segment 511 and the line segment 512. The CPU 11 determines whether or not the generated line segments 511 and 512 are stored in the line segment DB 124. The CPU 11 determines that the generated line segments 511 and 512 are not stored in the line segment DB 124. The CPU 11 stores the generated line segments 511 and 512 in the before-processing line segment column of the line segment DB 124.

The CPU 11 deletes the pieces of location information of all observation points B, C, D, E, F, I, J, K, and L stored in the observation point DB 123. The CPU 11 determines whether or not a line segment is stored in the before-processing line segment column of the line segment DB 124. If determining that a line segment is stored in the before-processing line segment column of the line segment DB 124, the CPU 11 extracts the line segment 511 from the before-processing line segment column of the line segment DB 124.

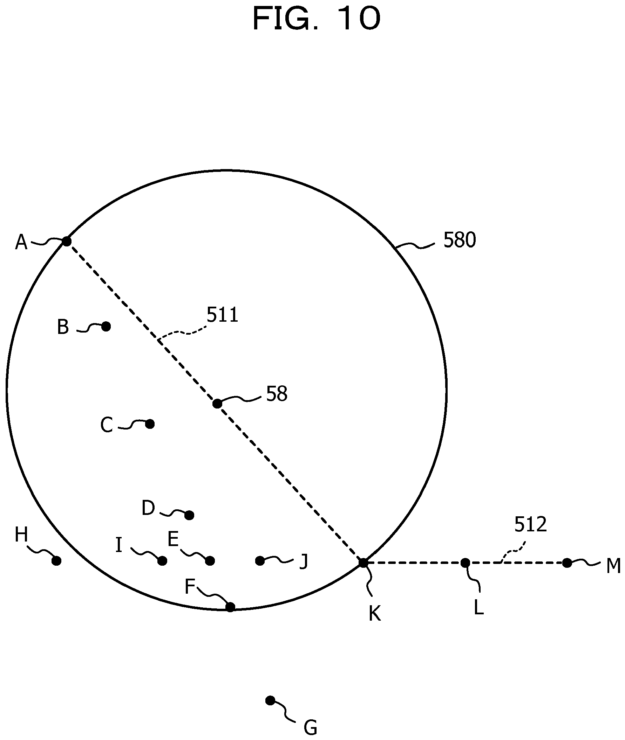

FIG. 10 is an explanatory diagram for explaining pieces of location information in a circle 580 having the line segment 511 as the diameter. As illustrated in FIG. 10, the circle 580 is a circle that has the line segment 511 as the diameter and has a midpoint 58 of the line segment 511 as the center. The CPU 11 identifies pieces of location information of observation points B, C, D, E, F, I, and J that exist in the circle 580 having the extracted line segment 511 as the diameter from the location information DB 121. The CPU 11 stores the pieces of location information corresponding to the observation points B, C, D, E, F, I, and J in the observation point DB 123.

The CPU 11 determines whether or not the location information of an observation point is stored in the observation point DB 123. Because determining that the location information of an observation point is stored in the observation point DB 123, the CPU 11 extracts the location information of the observation point whose distance from the midpoint 58 of the line segment 511 is shortest from the observation point DB 123. The observation point whose distance from the midpoint 58 is shortest is the observation point C. Thus, the CPU 11 extracts the location information of the observation point C from the observation point DB 123.

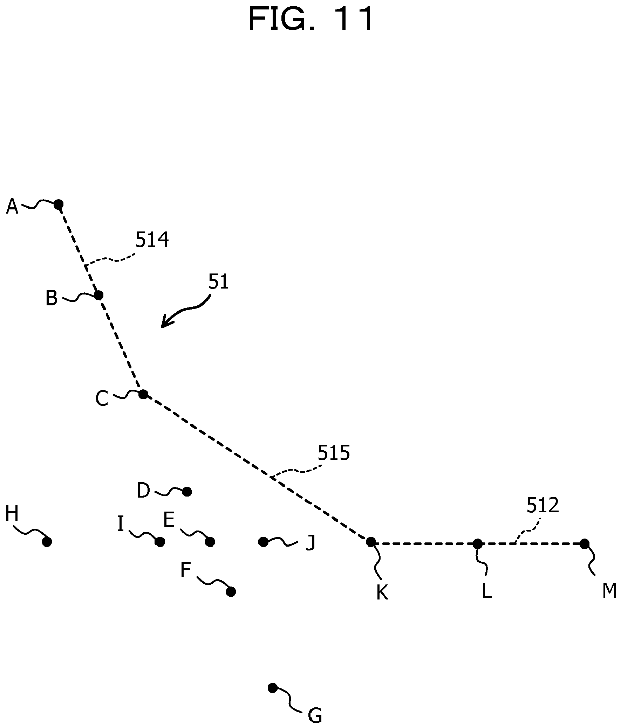

FIG. 11 is an explanatory diagram for explaining the locus 51 interpolated by an observation point C. As illustrated in FIG. 11, the locus 51 includes a line segment 514 that couples an observation point A and the observation point C and a line segment 515 that couples the observation point C and an observation point K.

The CPU 11 generates the line segment 514 and the line segment 515. The CPU 11 determines whether or not the generated line segments 514 and 515 are stored in the line segment DB 124. The CPU 11 determines that the generated line segments 514 and 515 are not stored in the line segment DB 124. The CPU 11 stores the generated line segments 514 and 515 in the before-processing line segment column of the line segment DB 124.

The CPU 11 deletes the pieces of location information of all observation points B, C, D, E, F, I, and J stored in the observation point DB 123. The CPU 11 determines whether or not a line segment is stored in the before-processing line segment column of the line segment DB 124. The CPU 11 repeats the above-described processing until determining that a line segment is not stored in the before-processing line segment column of the line segment DB 124.

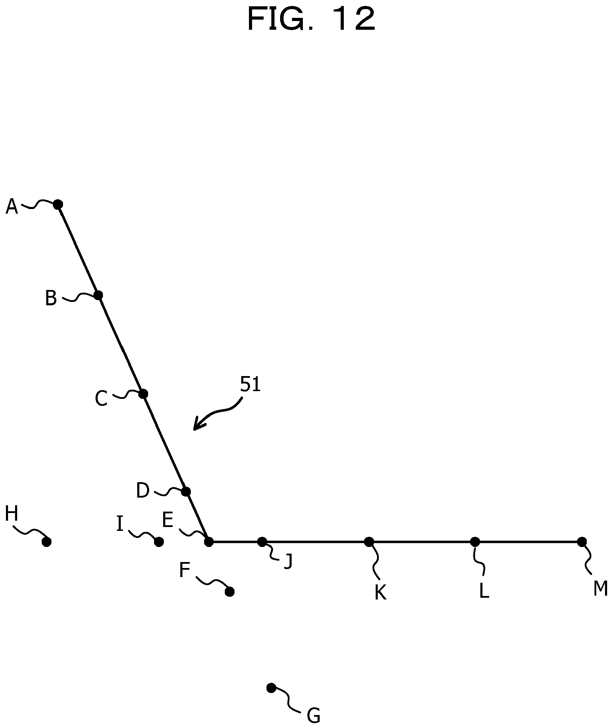

FIG. 12 is an explanatory diagram for explaining the locus 51 in the case in which it is determined that a line segment is not stored in the before-processing line segment column of the line segment DB 124. The locus 51 is a locus that couples observation points A, B, C, D, E, J, K, L, and M. If determining that a line segment is not stored in the before-processing line segment column of the line segment DB 124, the CPU 11 stores the locus 51 interpolated by the observation points B, C, D, E, J, K, and L in the interpolation DB 125. Thereafter, the CPU 11 executes similar processing for the loci 52 to 56 but description is omitted for simplification.

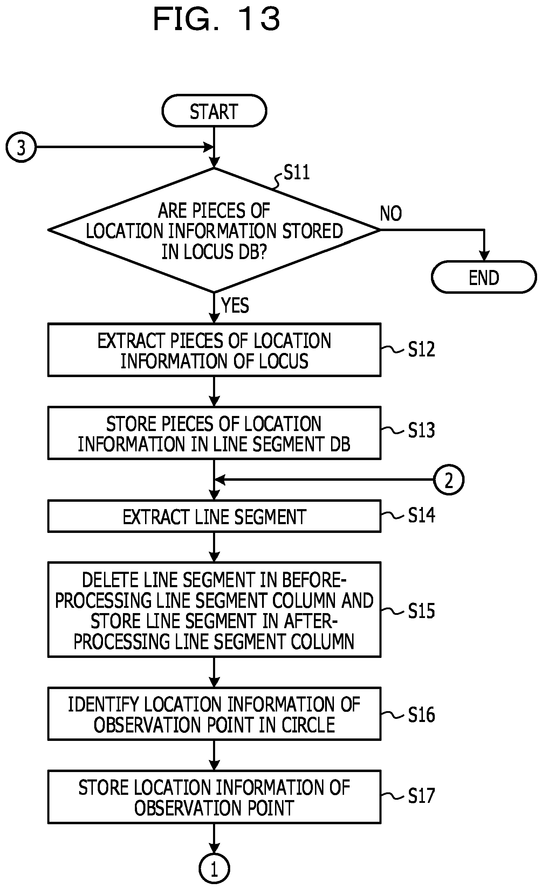

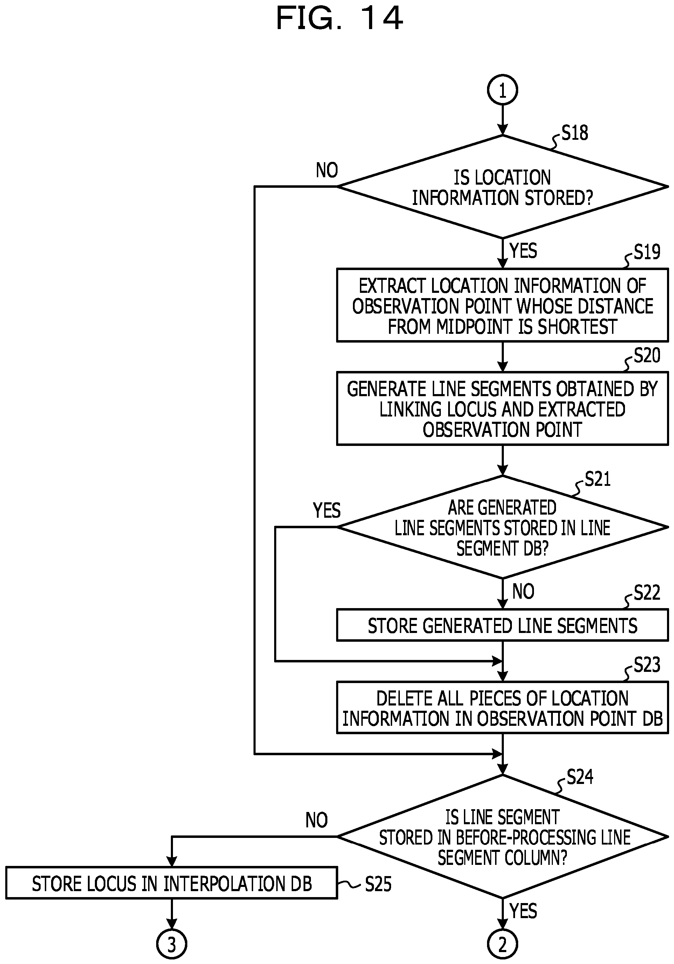

FIG. 13 and FIG. 14 are a flowchart illustrating a processing procedure of an information processing system in the present embodiment. The CPU 11 determines whether or not pieces of location information are stored in the locus DB 122 (step S11). If determining that pieces of location information are stored in the locus DB 122 (step S11: YES), the CPU 11 extracts pieces of location information of one locus from the locus DB 122 (step S12).

The CPU 11 stores the extracted pieces of location information of the locus in the before-processing line segment column of the line segment DB 124 (step S13). The CPU 11 extracts a line segment from the line segment DB 124 (step S14). The CPU 11 deletes the extracted line segment from the before-processing line segment column and stores the line segment in the after-processing line segment column (step S15).

The CPU 11 identifies the location information of the observation point that exists in the circle having the extracted line segment as the diameter from the location information DB 121 (step S16). The CPU 11 stores the identified location information of the observation point in the observation point DB 123 (step S17).

The CPU 11 determines whether or not the location information of an observation point is stored in the observation point DB 123 (step S18). If determining that the location information of an observation point is not stored in the observation point DB 123 (step S18: NO), the CPU 11 shifts the processing to a step S24. If determining that the location information of an observation point is stored in the observation point DB 123 (step S18: YES), the CPU 11 extracts the location information of the observation point whose distance from the midpoint of the extracted line segment is shortest from the observation point DB 123 (step S19).

The CPU 11 generates line segments obtained by linking the locus and the extracted observation point (step S20). For example, the CPU 11 interpolates the locus by the extracted observation point. The CPU 11 determines whether or not the generated line segments are stored in the line segment DB 124 (step S21). If determining that the generated line segments are stored in the line segment DB 124 (step S21: YES), the CPU 11 shifts the processing to a step S23. If determining that the generated line segments are not stored in the line segment DB 124 (step S21: NO), the CPU 11 stores the generated line segments in the before-processing line segment column of the line segment DB 124 (step S22).

The CPU 11 deletes the location information of all observation points stored in the observation point DB 123 (step S23). The CPU 11 determines whether or not a line segment is stored in the before-processing line segment column of the line segment DB 124 (step S24). If determining that a line segment is stored in the before-processing line segment column of the line segment DB 124 (step S24: YES), the CPU 11 shifts the processing to the step S14 and repeats the processing. If determining that a line segment is not stored in the before-processing line segment column of the line segment DB 124 (step S24: NO), the CPU 11 stores the interpolated locus in the interpolation DB 125 (step S25) and shifts the processing to the step S11. If determining that pieces of location information are not stored in the locus DB 122 (step S11: NO), the CPU 11 ends the processing.

According to one aspect, the locus may be interpolated along the proper path.

If the angle between two line segments is an acute angle, these line segments are an excess path in many cases. According to one aspect, the angle between generated two line segments may be set to 90 degrees or larger by identifying the location information of the observation point that exists in the circle having the extracted line segment as the diameter from the location information DB 121. This allows the CPU 11 to suppress the line segment generation in which the angle between two line segments is an acute angle and thus suppress generation of an excess path.

According to one aspect, the locus may be interpolated along the proper path by extracting the location information of the observation point whose distance from the midpoint of the extracted line segment is shortest from the observation point DB 123.

The information processing device 1 may be utilized for the following use purposes, for example, by using information on the interpolated locus. For example, when providing a navigation service, the information processing device 1 may identify the location of a movable object on a map with higher accuracy or calculate the time to reach the destination with higher accuracy.

Alternatively, when generating a diary for being posted on the Web in a Web-diary service, the information processing device 1 may generate information on the action history with higher accuracy regarding the user and cause the information to be included in the dairy.

Alternatively, the information processing device 1 may grasp information relating to the traveling path and traveling status of a movable object more correctly by acquiring information on the interpolated locus. Due to this, for example, when traffic analysis for urban transportation planning is carried out, improvement in the accuracy of analysis of the movement velocity of movable objects and the traffic volume may be intended.

Alternatively, for example, when the information processing device 1 is used as an operation management system in the transportation business, the traveling status of movable objects may be grasped in more detail by using information on the interpolated locus and the result of the analysis may be utilized for teaching to drivers and so forth.

### [Embodiment 2]

An embodiment 2 is an embodiment in which observation points included in the range in which two circles centered at two end points of a line segment overlap are identified. In the following, configurations and operations other than configurations and operations particularly described are equivalent to those of the embodiment 1 and description is omitted for simplification.

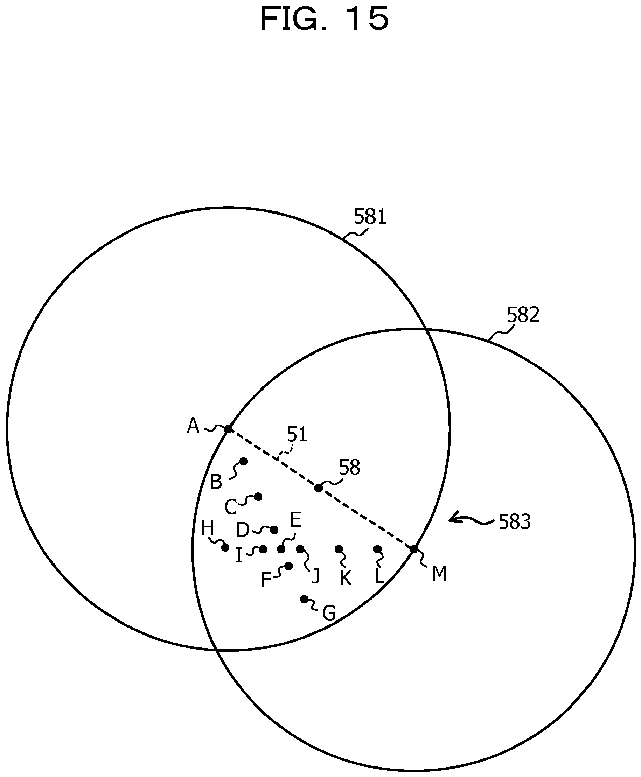

An information processing system in the present embodiment will be described below. FIG. 15 is an explanatory diagram for explaining an overlapping range in which circles centered at two end points of a locus overlap. As illustrated in FIG. 15, a circle 581 is a circle that has an observation point A as the center and has the locus 51 as the radius. A circle 582 is a circle that has an observation point M as the center and has the locus 51 as the radius. In the overlapping range 583, observation points B, C, D, E, F, G, H, I, J, K, and L are included.

The CPU 11 generates the circle 581 and the circle 582 after extracting the locus 51. The CPU 11 extracts pieces of location information of the observation points B, C, D, E, F, G, H, I, J, K, and L existing in the overlapping range 583 of the generated circle 581 and circle 582 from the location information DB 121. The CPU 11 stores the pieces of location information corresponding to the observation points B, C, D, E, F, G, H, I, J, K, and L in the observation point DB 123.

The pieces of location information corresponding to the observation points B, C, D, E, F, G, H, I, J, K, and L are stored in the observation point DB 123. Thus, the CPU 11 determines that the location information of an observation point is stored in the observation point DB 123. The observation point whose distance from the midpoint 58 is shortest is the observation point K. Thus, the CPU 11 extracts the location information of the observation point K from the observation point DB 123. The subsequent processing is similar to the processing of the embodiment 1 and description is omitted for simplification.

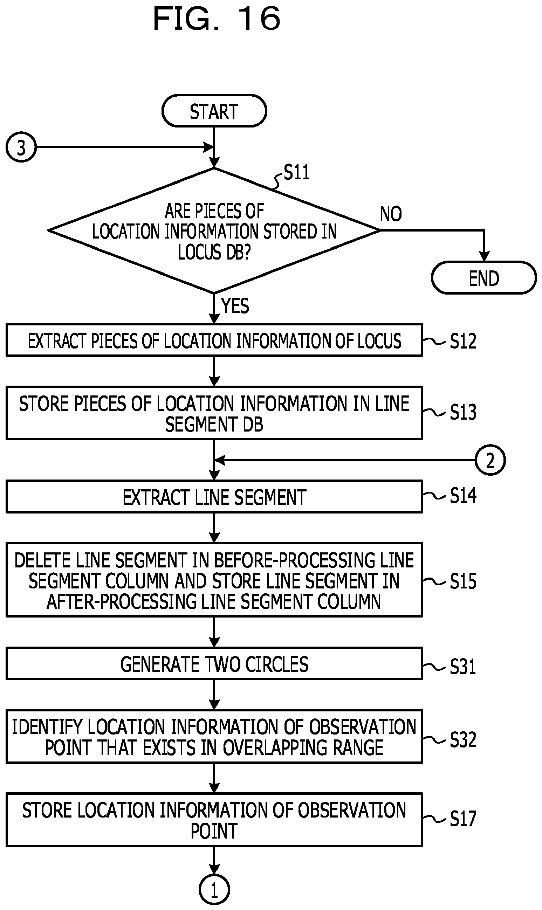

FIG. 16 is a flowchart illustrating an information processing system according to the embodiment 2. The processing other than the steps S31 and S32 is similar to the information processing system according to the above-described embodiment 1 and therefore description is omitted for simplification. After ending the processing of the step S15, the CPU 11 generates two circles that each has the extracted line segment as the radius and has two end points of the line segment as the respective centers (step S31). The CPU 11 identifies the location information of the observation point that exists in the overlapping range between the two circles from the location information DB 121 (step S32). Thereafter, the CPU 11 shifts the processing to the step S17.

According to one aspect, the angle between generated two line segments may be set to 60 degrees or larger by identifying the location information of the observation point that exists in the overlapping range between the two circles from the location information DB 121. This allows the CPU 11 to suppress generation of an excess path.

### [Embodiment 3]

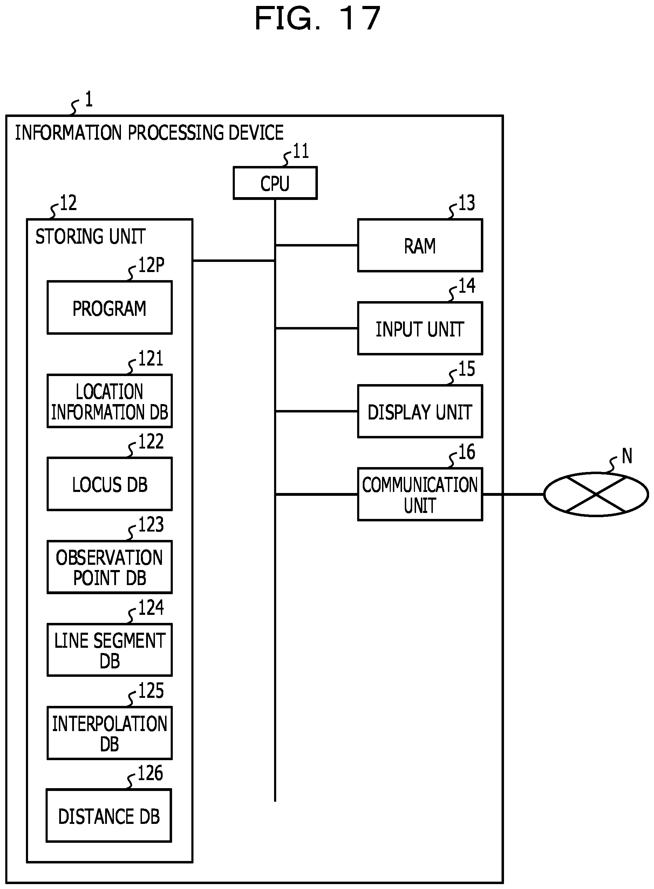

An embodiment 3 is an embodiment in which the observation point having the smallest sum of the distances from both end points of a line segment is extracted. In the following, configurations and operations other than configurations and operations particularly described are equivalent to those of the embodiment 1 and description is omitted for simplification. FIG. 17 is a block diagram illustrating a hardware group of an information processing device. A storing unit 12 of an information processing device 1 depicted in FIG. 17 further includes a distance DB 126.

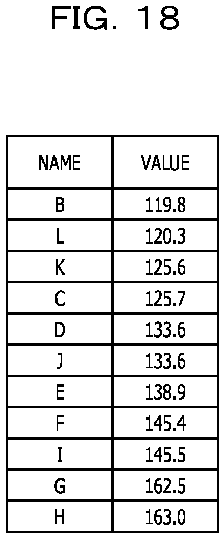

FIG. 18 is an explanatory diagram illustrating one example of a record layout of a distance DB. The distance DB illustrated by reference to FIG. 18 may be the distance DB 126 depicted in FIG. 17. The distance DB 126 is a database that stores values relating to the distance between an extracted line segment and an observation point. The distance DB 126 includes a name column, a value column and so forth. In the name column, names for identifying pieces of location information of observation points are stored. In the value column, the sums of the distances between the observation point and both end points of the line segment are stored. The storing method of the distance DB 126 is as follows. The CPU 11 calculates the sum of the distances between an observation point and both end points of the line segment. The CPU 11 associates the calculated sum with the name of the observation point and stores the sum in the distance DB 126.

An information processing system in the present embodiment will be described below with reference to FIG. 18. After determining that pieces of location information of observation points are stored in the observation point DB 123, the CPU 11 calculates the sums of the distances between an observation point A and an observation point M as both ends of the locus 51 and the observation point. The CPU 11 extracts the location information of the observation point having the smallest calculated sum of the distances from the observation point DB 123. As represented in FIG. 18, the observation point having the smallest sum of the distances is an observation point B. The CPU 11 extracts the location information of the observation point B from the observation point DB 123.

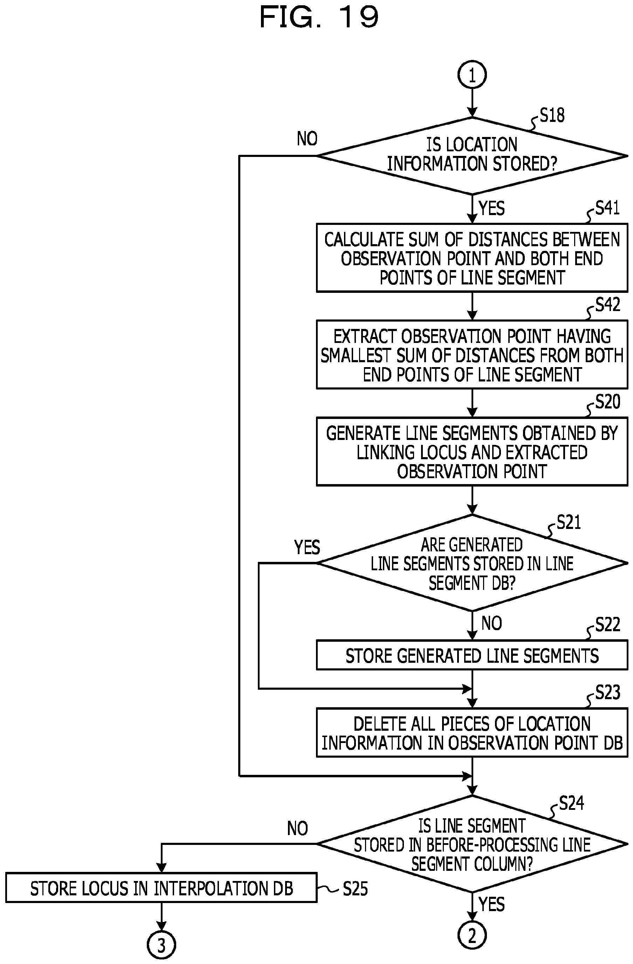

FIG. 19 is a flowchart illustrating an information processing system according to the embodiment 3. The processing other than the steps S41 and S42 is similar to the information processing system according to the above-described embodiment 1. Thus, description is omitted for simplification. If the step S18 results in YES, the CPU 11 calculates the sum of the distances between the observation point and both ends of the line segment (step S41). The CPU 11 extracts the observation point having the smallest sum of the distances from both end points of the line segment (step S42). Thereafter, the CPU 11 shifts the processing to the step S20.

According to one aspect, the locus may be interpolated along the proper path by extracting the observation point having the smallest sum of the distances from both end points of the line segment.

### [Embodiment 4]

An embodiment 4 is an embodiment in which plural loci are simultaneously interpolated. In the following, configurations and operations other than configurations and operations particularly described are equivalent to those of the embodiment 1 and description is omitted for simplification.

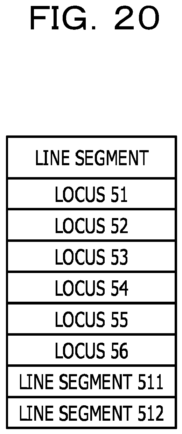

FIG. 20 is an explanatory diagram illustrating one example of a record layout of a line segment DB in the embodiment 4. The line segment DB illustrated by reference to FIG. 20 may be equivalent to the line segment DB 124 depicted in FIG. 1. The line segment DB 124 includes a line segment column. In the line segment column, loci and line segments are stored. The storing method of the line segment DB 124 will be described later.

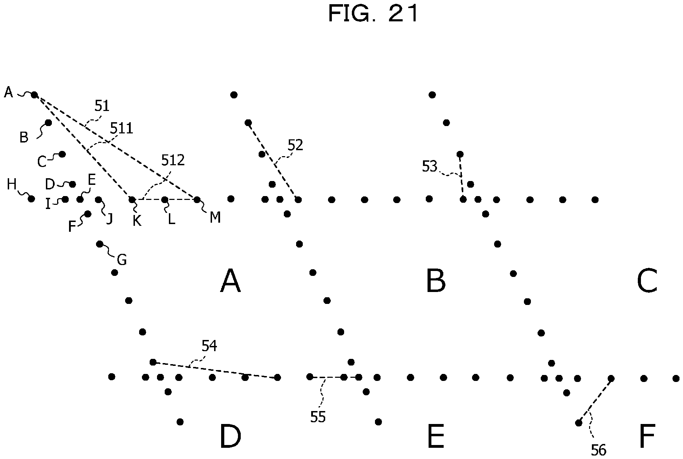

FIG. 21 is an explanatory diagram for explaining loci and observation points displayed on a display unit in the embodiment 4. The display unit illustrated by reference to FIG. 21 may be equivalent to the display unit 15 depicted in FIG. 1. A to F of FIG. 21 display pieces of location information with displaying of loci 51 to 56, respectively.

The CPU 11 extracts pieces of location information of IDs 1 to 6 corresponding to the loci 51 to 56 from the location information DB 121. The CPU 11 stores the pieces of location information of the IDs 1 to 6 in the line segment DB 124. The CPU 11 extracts the longest line segment from the line segment DB 124. Because the longest line segment is the locus 51, the CPU 11 extracts the locus 51 from the line segment DB 124.

The CPU 11 deletes the locus 51 from the line segment DB 124. After executing the processing similar to the processing of the embodiment 1, the CPU 11 determines that generated line segments 511 and 512 are not stored in the line segment DB 124. The CPU 11 stores the generated line segments 511 and 512 in the line segment DB 124. The CPU 11 interpolates the locus 51 by an observation point K. The CPU 11 stores the interpolated locus 51 in the interpolation DB 125.

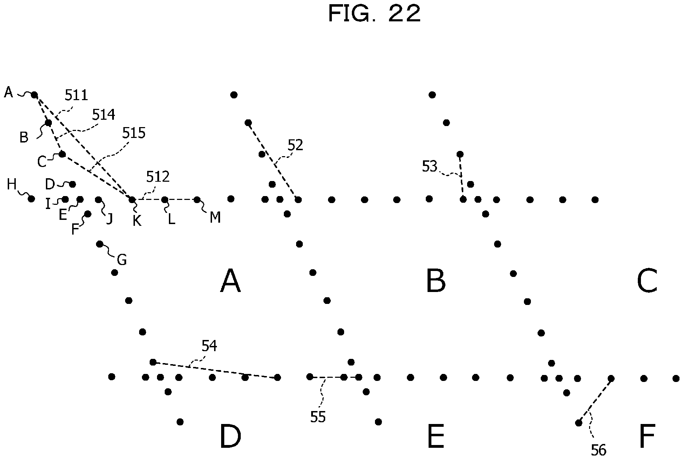

FIG. 22 is an explanatory diagram for explaining pieces of location information after the locus 51 is interpolated by the observation point K. As illustrated in A to F of FIG. 22, the longest line segment is the line segment 511. Thus, the CPU 11 extracts the line segment 511 from the line segment DB 124. The CPU 11 deletes the line segment 511 from the line segment DB 124. After executing the processing similar to the processing of the embodiment 1, the CPU 11 determines that generated line segments 514 and 515 are not stored in the line segment DB 124. The CPU 11 stores the generated line segments 514 and 515 in the line segment DB 124. The CPU 11 interpolates the locus 51 by an observation point C. The CPU 11 stores the interpolated locus 51 in the interpolation DB 125.

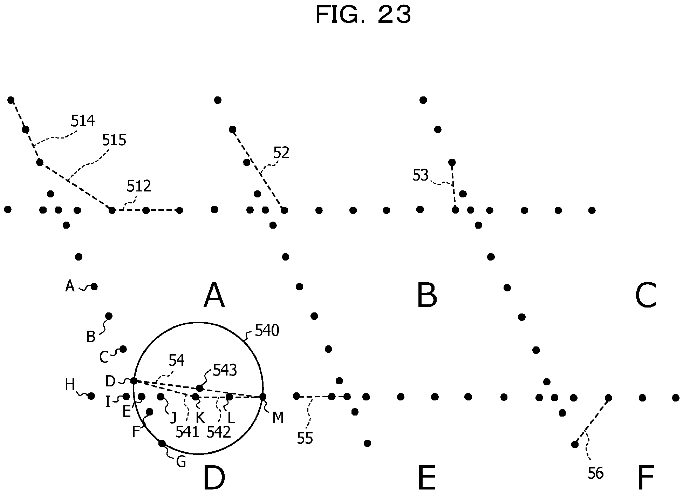

FIG. 23 is an explanatory diagram for explaining pieces of location information after the locus 54 is interpolated by the observation point K. As illustrated in FIG. 23D, a circle 540 is a circle that has the locus 54 as the diameter and has a midpoint 543 of the locus 54 as the center. The locus 54 includes a line segment 541 that couples an observation point D and the observation point K and a line segment 542 that couples the observation point K and an observation point M.

As illustrated in FIGs. 23A to 23F, the longest line segment is the locus 54. Thus, the CPU 11 extracts the locus 54 from the line segment DB 124. The CPU 11 deletes the locus 54 from the line segment DB 124. The CPU 11 identifies pieces of location information of observation points E, F, J, K, and L existing in the circle 540 having the extracted locus 54 as the diameter from the location information DB 121. The CPU 11 stores the pieces of location information of the observation points E, F, J, K, and L in the observation point DB 123.

The pieces of location information of the observation points E, F, J, K, and L are stored in the observation point DB 123. Thus, the CPU 11 determines that the location information of an observation point is stored in the observation point DB 123. The CPU 11 extracts the location information of the observation point whose distance from the midpoint 543 of the locus 54 is shortest from the observation point DB 123. The observation point whose distance from the midpoint 543 is shortest is the observation point K. Thus, the CPU 11 extracts the location information of the observation point K from the observation point DB 123.

The CPU 11 generates the line segment 541 and the line segment 542. The CPU 11 determines whether or not the generated line segments 541 and 542 are stored in the line segment DB 124. The CPU 11 determines that the generated line segments 541 and 542 are not stored in the line segment DB 124. The CPU 11 stores the generated line segments 541 and 542 in the line segment DB 124. The CPU 11 interpolates the locus 54 by the observation point K. The CPU 11 stores the interpolated locus 54 in the interpolation DB 125. Thereafter, the CPU 11 executes similar processing for the loci 51 to 56 but description is omitted for simplification.

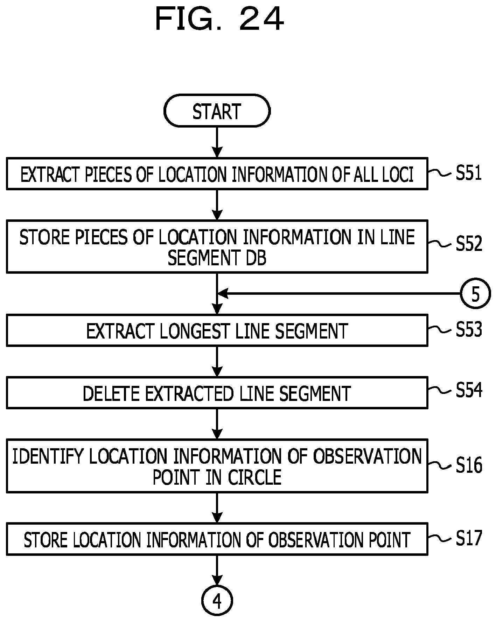

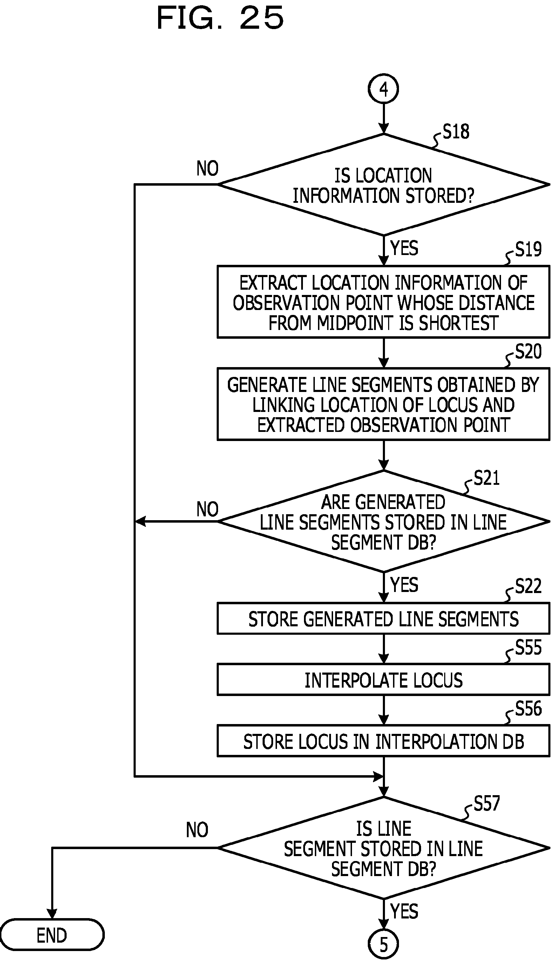

FIGs. 24 and 25 are a flowchart illustrating an information processing system according to the embodiment 4. The processing of steps S16 to S22 is similar to the information processing system according to the above-described embodiment 1 and therefore description is omitted for simplification. The CPU 11 extracts pieces of location information of all loci from the location information DB 121 (step S51). The CPU 11 stores the extracted pieces of location information in the line segment DB 124 (step S52).

The CPU 11 extracts the longest line segment from the line segment DB 124 (step S53). The CPU 11 deletes the extracted line segment from the line segment DB 124 (step S54) and shifts the processing to the step S16. When ending the processing of the step S22, the CPU 11 interpolates the locus by the extracted observation point (step S55). The CPU 11 stores the interpolated locus in the interpolation DB 125 (step S56).

The CPU 11 determines whether or not a line segment is stored in the line segment DB 124 (step S57). If determining that a line segment is stored in the line segment DB 124 (step S57: YES), the CPU 11 shifts the processing to the step S53. If determining that a line segment is not stored in the line segment DB 124 (step S57: NO), the CPU 11 ends the processing.

According to one aspect, when plural loci exist, the loci may be simultaneously interpolated and thus the processing time may be shortened.

### [Embodiment 5]

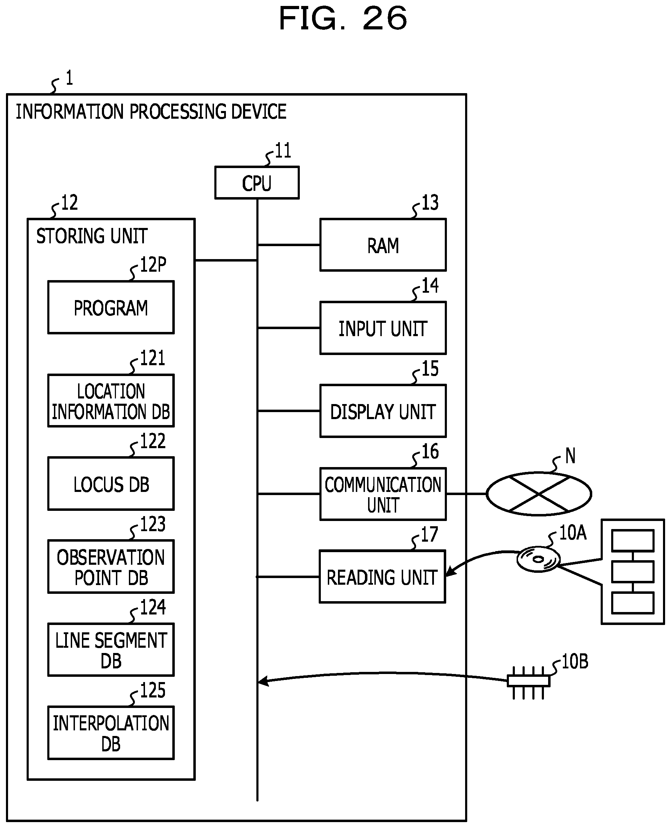

An embodiment 5 will be described in detail below based on drawings that illustrate the embodiment. FIG. 26 is a block diagram illustrating a hardware group of an information processing device. In the following, configurations and operations other than configurations and operations particularly described are equivalent to those of the embodiment 1 and description is omitted for simplification. An information processing device 1 illustrated in FIG. 26 reads a program that executes the above-described various kinds of software processing from a portable recording medium 10A or a semiconductor memory 10B or downloads the program from another server (not illustrated) through the communication network N. This program is installed as the program 12P and is loaded into the storing unit 12 to be executed. This allows functioning as the above-described information processing device 1.

The program for operating the information processing device 1 may be stored in the storing unit 12 by causing a reading unit 17 such as a disc drive to read the portable recording medium 10A such as a compact disc (CD)-ROM, a digital versatile disc (DVD) disc, a memory card, or a universal serial bus (USB) memory. The semiconductor memory 10B such as a flash memory that stores this program may be mounted in the information processing device 1. The communication unit 16 is a wireless LAN card, a communication module for a mobile phone or the like, for example. The communication unit 16 is coupled to another server through the communication network N. It is also possible to download this program from another server (not illustrated) coupled through the communication network N such as the Internet by the communication unit 16. The contents thereof will be described below.

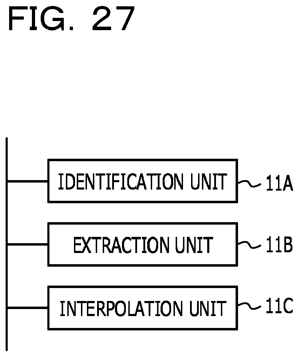

FIG. 27 is a functional block diagram of an information processing device. The information processing device illustrated by reference to FIG. 27 may be the information processing device 1 depicted in FIG. 26. The information processing device 1 operates as follows due to execution of the program 12P by the CPU 11. An identification unit 11A identifies plural observation points near a line segment whose end points are a starting point and a terminal point between which a locus is interpolated. An extraction unit 11B extracts the observation point close to the line segment from the plural observation points identified by the identification unit 11A. An interpolation unit 11C interpolates the locus based on the observation point extracted by the extraction unit 11B.

## Claims

1. An information processing method executed by a processor included in an information processing device, the information processing method comprising:
identifying a plurality of observation points near a line segment whose end points are a starting point and a terminal point between which a locus is interpolated;
extracting an observation point from the plurality of identified observation points based on a distance from a given point on the line segment; and
interpolating the locus by using the extracted observation point.

2. The information processing method according to claim 1, wherein the identifying includes:
extracting a longest line segment in a plurality of line segments each having the starting point and the terminal point, and
identifying a plurality of observation points near the extracted line segment.

3. The information processing method according to any of claims 1 or 2,
wherein the identifying includes identifying an observation point that exists in a circle having the line segment as a diameter.

4. The information processing method according to any of claims 1 or 2,
wherein the identifying includes identifying an observation point included in a range in which two circles having two end points of the line segment as respective centers overlap.

5. The information processing method according to any of claims 1 or 2,
wherein the extracting includes extracting an observation point whose distance from a midpoint of the line segment is shortest in the observation points that are identified.

6. The information processing method according to any of claims 1 or 2,
wherein the extracting includes extracting an observation point having a smallest sum of distances from both end points of the line segment in the observation points that are identified.

7. An information processing device comprising:
an identification unit configured to identify a plurality of observation points near a line segment whose end points are a starting point and a terminal point between which a locus is interpolated;
an extraction unit configured to extract an observation point from the plurality of identified observation points based on a distance from a given point on the line segment; and
an interpolation unit configured to interpolate the locus by using the extracted observation point.

8. The information processing device according to claim 7, wherein the identification unit is configured to:
extract a longest line segment in a plurality of line segments each having the starting point and the terminal point, and
identify a plurality of observation points near the extracted line segment.

9. The information processing device according to any of claims 7 or 8, wherein the identification unit is configured to
identify an observation point that exists in a circle having the line segment as a diameter.

10. The information processing device according to any of claims 7 or 8, wherein the identification unit is configured to
identify an observation point included in a range in which two circles having two end points of the line segment as respective centers overlap.

11. The information processing device according to any of claims 7 or 8, wherein the extraction unit is configured to
extract an observation point whose distance from a midpoint of the line segment is shortest in the observation points that are identified.

12. The information processing device according to any of claims 7 or 8, wherein the extraction unit is configured to
extract an observation point having a smallest sum of distances from both end points of the line segment in the observation points that are identified.

13. An information processing program that causes a processor included in an information processing device to execute a process, the process comprising:
identifying a plurality of observation points near a line segment whose end points are a starting point and a terminal point between which a locus is interpolated;
extracting an observation point from the plurality of identified observation points based on a distance from a given point on the line segment; and
interpolating the locus by using the extracted observation point.

14. The information processing program according to claim 13, wherein the identifying includes:
extracting a longest line segment in a plurality of line segments each having the starting point and the terminal point, and
identifying a plurality of observation points near the extracted line segment.

15. The information processing program according to any of claims 13 or 14,
wherein the identifying includes identifying an observation point that exists in a circle having the line segment as a diameter.
